# FASCICULE DE BREVET EUROPEEN

(11) **EP 3 059 660 B1**
(45) Date de publication et mention de la délivrance du brevet: **22.08.2018**
(21) Numéro de dépôt: 16155746.7
(22) Date de dépôt: 15.02.2016
(51) Int. Cl.: G06F 3/01, G06F 3/03, G06F 3/041

(54) **INTERFACE D'INTERACTION COMPRENANT UN ECRAN TACTILE, UN DETECTEUR DE PROXIMITE ET UNE PLAQUE DE PROTECTION**
INTERAKTIONSSCHNITTSTELLE, DIE EINEN TOUCHSCREEN, EINEN NÄHERUNGSSENSOR UND EINE SCHUTZPLATTE UMFASST
INTERACTION INTERFACE INCLUDING A TOUCH SCREEN, A PROXIMITY DETECTOR AND A PROTECTIVE PLATE

(30) Priorité: 17.02.2015 FR 1551332
(43) Date de publication de la demande: 24.08.2016
(73) Titulaire: Renault S.A.S., 92100 Boulogne-Billancourt (FR)
(72) Inventeur: NASSAR, Waad, 78150 LE CHESNAY (FR)

(56) Documents cités:
- EP-A1- 2 595 366
- EP-A2- 2 565 603
- US-A1- 2011 310 005

## Description

### DOMAINE TECHNIQUE AUQUEL SE RAPPORTE L'INVENTION

La présente invention concerne de manière générale le domaine des interfaces d'interaction permettant à un utilisateur d'interagir avec un dispositif électronique.

Elle concerne plus particulièrement une interface d'interaction comprenant
- un écran tactile recouvert par une plaque de protection sensiblement plane qui est au moins en partie transparente dans le domaine de rayonnement visible et qui présente une face interne tournée vers ledit écran tactile, et
- un détecteur de proximité comportant au moins un émetteur rayonnant dans un domaine infrarouge et au moins un récepteur adapté à détecter un rayonnement dans ledit domaine infrarouge, chaque émetteur et chaque récepteur étant situé sur le pourtour dudit écran tactile.

Elle s'applique de manière avantageuse lorsqu'un utilisateur est amené à interagir avec ladite interface tout en réalisant d'autres actions, comme par exemple la conduite d'un véhicule.

En particulier, elle s'applique de manière particulièrement intéressante dans un véhicule automobile.

### ARRIERE-PLAN TECHNOLOGIQUE

Les interfaces d'interaction comprenant un écran tactile, telles que décrites dans les documents EP 2 565 603 A2 et US 2011/310005 A1, sont de plus en plus répandues dans l'environnement quotidien. De telles interfaces équipent par exemple un nombre grandissant de téléphones portables, tablettes à écran tactile, distributeurs de titres de transport, machines-outils, ou encore véhicules automobiles.

Dans un véhicule automobile, par exemple, une telle interface peut par exemple servir à commander un poste de radio. Elle peut aussi servir à afficher des informations de géolocalisation.

Il est intéressant de munir une telle interface d'interaction, comprenant un écran tactile, d'un détecteur de proximité permettant de détecter qu'une main d'un utilisateur s'approche de l'interface, et pouvant aussi, par exemple, déterminer une position de cette main face à l'écran tactile.

En détectant ainsi que la main d'un utilisateur est à proximité de l'interface d'interaction, cette dernière peut optimiser le contenu des informations affichées, de manière à les adapter au comportement de l'utilisateur avant même qu'il ne touche l'écran tactile.

Par exemple, en cas d'approche, si l'interface était dans un état de veille, elle peut basculer de cet état de veille à un état de fonctionnement standard. Ou encore, si une approche vers une zone particulière de l'écran est détectée, cette zone peut alors être affichée de manière agrandie, par exemple en plein écran.

De telles dispositions, rendues possibles par la collaboration d'un détecteur de proximité avec l'écran tactile, sont particulièrement intéressantes lorsque l'utilisateur de l'interface d'interaction est amené à interagir avec celle-ci tout en réalisant d'autres actions, par exemple tout en conduisant un véhicule automobile, ou tout en pilotant une machine-outil.

Ces dispositions permettent en effet de réduire le temps d'interaction de l'utilisateur avec l'interface, par exemple en sélectionnant et affichant de manière agrandie une zone de l'écran, avant même que l'utilisateur ne l'ait touchée. Le temps ainsi gagné permet alors à l'utilisateur de consacrer une part plus importante de son attention à d'autres actions (comme la conduite d'un véhicule automobile).

Concrètement, il est connu de réaliser un tel détecteur de proximité au moyen d'un émetteur qui rayonne dans un domaine infrarouge et qui est situé sur le pourtour dudit écran tactile, et d'un récepteur adapté à détecter un rayonnement dans ledit domaine infrarouge. Le rayonnement ainsi émis est dirigé vers l'extérieur de l'interface d'interaction. Si une main d'un utilisateur, par exemple, est face au détecteur, à proximité de ce dernier, elle réfléchit une partie du rayonnement émis vers le récepteur, qui détecte ainsi sa présence.

Il est connu qu'une telle interface d'interaction présente en façade la face avant de l'écran tactile enchâssée dans un cadre. Le cadre protège les composants de l'interface situés sur le pourtour de l'écran tactile, en particulier chaque émetteur et chaque récepteur dudit rayonnement du domaine infrarouge, et les sépare de l'extérieur de l'interface d'interaction.

Pour le fonctionnement du détecteur de proximité, dont le principe a été décrit ci-dessus, il est nécessaire que le rayonnement émis par chaque émetteur sorte de l'interface d'interaction.

Il est connu de ménager à cette fin, dans ledit cadre, au moins une ouverture ayant la fonction d'une fenêtre, dans laquelle est insérée une plaque, par exemple en matière plastique, transparente au moins en partie dans ledit domaine de rayonnement infrarouge.

Une telle plaque permet par ailleurs au rayonnement réfléchi par un objet, ou par la main d'un utilisateur, de pénétrer dans l'interface d'interaction jusqu'à un récepteur, ce qui permet la détection de cet objet, ou de cette main.

Dans l'arrangement décrit ci-dessus, l'interface d'interaction présente donc en façade plusieurs éléments, notamment la face avant de l'écran tactile, le cadre, et au moins une plaque de protection telle que décrite ci-dessus.

Du fait de ce caractère composite, la surface d'une telle façade présente des discontinuités ou des décrochements peu esthétiques, salissants et désagréables au toucher. En particulier, de tels discontinuités ou décrochements peuvent gêner un utilisateur lorsqu'il souhaite positionner l'un de ses doigts près d'un bord de la face avant de l'écran tactile.

### OBJET DE L'INVENTION

Afin de remédier aux inconvénients précités de l'état de la technique, la présente invention propose une interface d'interaction comme définie dans les revendications.

### DESCRIPTION DETAILLEE D'UN EXEMPLE DE REALISATION

La description qui va suivre en regard des dessins annexés, donnés à titre d'exemples non limitatifs, fera bien comprendre en quoi consiste l'invention et comment elle peut être réalisée.

Sur les dessins annexés :
- la figure 1 représente schématiquement le principe de fonctionnement du détecteur de proximité d'une interface d'interaction conforme à l'invention,
- la figure 2 représente schématiquement l'interface d'interaction de la figure 1, vue de face,
- la figure 3 est une vue schématique en coupe, selon le plan A-A de la figure 2,
- la figure 4 est une vue de détail de la zone IV de la figure 3.

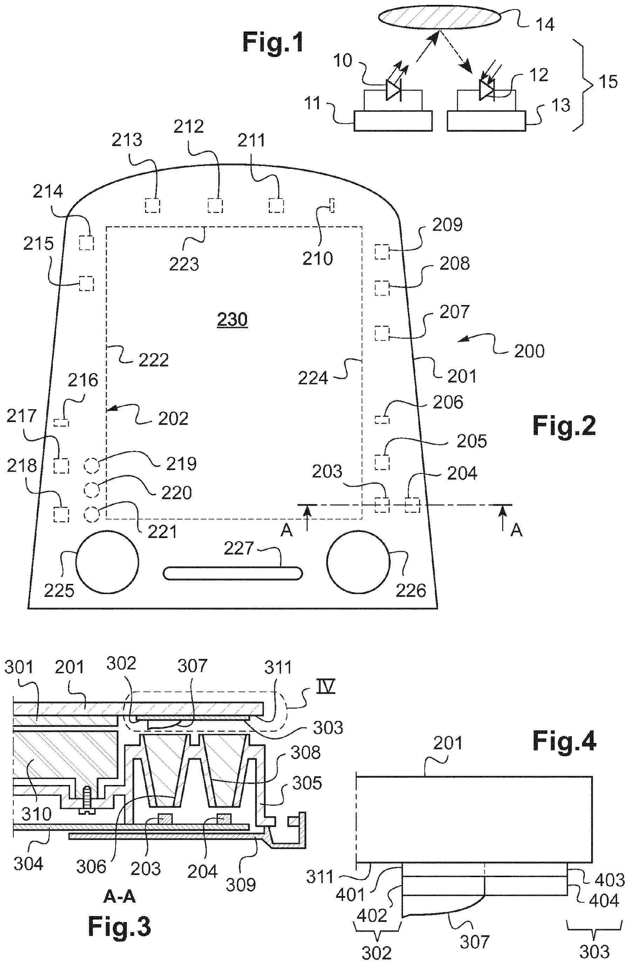

Sur la figure 1, on a représenté schématiquement des composants d'un détecteur de proximité 15 d'une interface d'interaction, permettant d'illustrer le principe de fonctionnement de ce détecteur.

Le détecteur de proximité 15 comprend au moins un émetteur 10 qui rayonne dans un domaine infrarouge, tel par exemple qu'une diode électroluminescente. Le fonctionnement de l'émetteur est assuré par un module de commande 11 comprenant notamment une alimentation électrique délivrant à l'émetteur un courant électrique adapté.

Le rayonnement émis par l'émetteur 10 est dirigé vers l'extérieur du détecteur de proximité 15 de l'interface d'interaction.

Lorsqu'une main 14 d'un utilisateur (ou lorsqu'un objet) est proche du détecteur de proximité 15, elle réfléchit une partie du rayonnement que l'émetteur a émis. En particulier, une partie du rayonnement émis par l'émetteur 10 est ainsi réfléchie vers un récepteur 12, tel par exemple qu'une photodiode.

Plus la main 14 d'un utilisateur est proche du détecteur de proximité 15, et plus elle réfléchit vers ce dernier une part grande du rayonnement que l'émetteur a émis. La puissance du rayonnement infrarouge détectée par le récepteur 12 est ainsi d'autant plus grande que la main d'un utilisateur est proche du détecteur de proximité 15 (pour une orientation de la main donnée), ce qui, éventuellement combiné à d'autres critères, permet de détecter la proximité de la main 14 d'un utilisateur.

Un module de détection 13 assure le fonctionnement du récepteur 12, notamment en l'alimentant électriquement de manière appropriée, et analyse les signaux qu'il délivre afin de détecter un objet, ou la main d'un utilisateur.

Sur la figure 2, on a représenté schématiquement une interface d'interaction 200 selon l'invention, vue de face, telle par exemple que la voit un utilisateur. La figure 2 représente ainsi schématiquement la façade présentée par l'interface d'interaction 200 à un utilisateur.

L'interface d'interaction 200 comprend un écran tactile 230, qui présente ici un contour 202 en forme de rectangle.

Des premiers émetteurs 203, 205, 207, 208 et 209 qui rayonnent dans un domaine infrarouge, par exemple des diodes électroluminescentes, sont situés le long d'un premier bord 224 dudit rectangle.

Les premiers émetteurs 203, 205, 207, 208 et 209 présentent le plus souvent une surface d'émission petite par rapport à la surface de l'écran tactile 230, en particulier lorsque chacun de ces premiers émetteurs est constitué d'une diode électroluminescente. Il est alors intéressant de disposer plusieurs émetteurs, répartis le long d'un bord de l'écran tactile 230, de manière à ce que l'ensemble des faisceaux lumineux émis par ces premiers émetteurs couvrent au mieux la zone située en vis-à-vis de la face avant de l'écran tactile, de sorte qu'un objet (ou la main d'un utilisateur) puisse effectivement être détecté dans cette zone. Cette disposition améliore en outre l'homogénéité de l'éclairement, au sein de la zone éclairée, et donc l'efficacité de détection.

Des seconds émetteurs 214, 215, 217 et 218, qui rayonnent dans ledit domaine infrarouge, sont par ailleurs situés à l'opposé des premiers émetteurs 203, 205, 207, 208 et 209 par rapport à l'écran tactile 230 (le long d'un second bord 222 du rectangle qui est opposé à son premier bord 224).

Les seconds émetteurs 214, 215, 217 et 218 sont répartis le long du second bord 222, de manière sensiblement comparable à la manière dont les premiers émetteurs 203, 205, 207, 208 et 209 sont répartis le long du premier bord 224, afin, là encore, d'optimiser l'étendue de la zone éclairée en vis-à-vis de la face avant de l'écran tactile.

Des troisièmes émetteurs 211, 212 et 213, qui rayonnent dans ledit domaine infrarouge, sont également répartis le long d'un troisième bord 223 dudit rectangle.

En éclairant ainsi la zone située en avant de l'écran tactile 230 depuis trois bords 222, 223 et 224 de cet écran, au lieu par exemple de l'éclairer depuis un bord de l'écran seulement, on optimise l'étendue de la zone de l'espace qui est éclairée en vis-à-vis de la face avant de l'écran tactile 230, ainsi que l'homogénéité de l'éclairage au sein de cette zone. L'étendue de la zone de l'espace dans laquelle la main d'un utilisateur peut être détectée s'en trouve ainsi augmentée.

L'interface d'interaction 200 comprend également des récepteurs 206, 210 et 216 adaptés à détecter un rayonnement dans ledit domaine infrarouge, par exemple des photodiodes. Le premier récepteur 206 est ici situé le long du premier côté 224 du contour 202 de l'écran tactile 230, le second récepteur 216 est situé le long du second côté 222, et le troisième récepteur 210 le long du troisième côté 223 de ce contour.

Répartir ainsi ces trois récepteurs autour de l'écran tactile 230, en trois positions distantes les unes des autres, permet une détection efficace du rayonnement que réfléchit une main d'un utilisateur présente au dessus de l'interface d'interaction 200. Cet arrangement améliore par ailleurs la précision d'un repérage, éventuellement tridimensionnel, de la position de la main d'un utilisateur (ou de la position d'un objet) située face à l'interface d'interaction par un tel détecteur de proximité 15.

Selon une caractéristique particulièrement avantageuse de l'invention, il est prévu une plaque de protection 201 qui recouvre l'écran tactile 230 ainsi que chaque émetteur et chaque récepteur, qui est transparente dans ledit domaine de rayonnement infrarouge, et qui présente sur sa face interne 311 au moins une zone, située en vis-à-vis de chaque émetteur et de chaque récepteur, couverte d'un premier revêtement 302 plus transparent dans ledit domaine de rayonnement infrarouge que dans le domaine de rayonnement visible (comme représenté à la figure 3).

La plaque de protection 201, par exemple une plaque de verre, est transparente de manière à ce qu'un utilisateur puisse voir les informations affichées par l'écran tactile 230.

La plaque de protection 201 est également transparente, au moins en partie, dans ledit domaine de rayonnement infrarouge, de manière à ce que le rayonnement du domaine infrarouge émis et détecté par le détecteur de proximité 15 puisse la traverser.

La plaque de protection 201 occupe ici la totalité de la façade que l'interface d'interaction 200 présente à un utilisateur, à l'exception de trois boutons de commande 225, 226 et 227, engagés chacun dans une ouverture prévue dans la plaque de protection 210, ladite ouverture étant de forme complémentaire de la forme dudit bouton de commande.

Les boutons de commande 225, 226 et 227 sont mobiles pour permettre à un utilisateur de commander des fonctionnalités de l'interface 200, par exemple en exerçant une pression sur l'un de ces boutons ou en le faisant pivoter.

De tels boutons de commande complètent avantageusement les possibilités offertes par l'écran tactile 230 pour commander l'interface 200. Ils permettent en particulier de commander de manière efficace et commode les opérations les plus basiques d'une telle interface, comme par exemple la mise sous tension ou hors tension de l'interface d'interaction, ou encore la modification de la puissance sonore de signaux acoustiques qu'elle diffuse.

L'interface d'interaction 200 comprend également des capteurs tactiles capacitifs 219, 220 et 221, distincts de l'écran tactile 230, et situés sur son pourtour. Les capteurs tactiles capacitifs 219, 220 et 221 sont eux aussi recouverts par la plaque de protection 201.

Ces capteurs tactiles capacitifs 219, 220 et 221 permettent à un utilisateur de commander des fonctionnalités de l'interface d'interaction 200 en plaçant l'un de ses doigts sur la plaque de protection 201, en vis-à-vis de l'un de ces capteurs.

De même que les boutons de commande 225, 226 ou 227, ces capteurs tactiles capacitifs 219, 220 et 221 complètent avantageusement les possibilités de commande offertes par l'écran tactile 230 de l'interface 200.

L'interface d'interaction 200 comprend en outre des moyens de rétro-éclairage, comportant au moins un émetteur 204 d'un rayonnement dans le domaine visible, tel par exemple qu'une diode électroluminescente. Les moyens de rétro-éclairage sont situés à l'intérieur de l'interface d'interaction 200, et sont tournés en direction de la face interne 311 de la plaque de protection 201, de manière à éclairer cette dernière.

Dans l'exemple de réalisation représenté schématiquement sur la figure 2, les moyens de rétro-éclairage comprennent un seul émetteur 204. Dans d'autres exemples de réalisation, les moyens de rétro-éclairage peuvent comprendre plusieurs émetteurs, situés en différentes positions, par exemple réparties le long du pourtour de l'écran tactile 230.

Comme le montre la figure 3, l'écran tactile 230 comprend des moyens d'affichage 310, tels par exemple qu'un écran à cristaux liquides ou un écran à diodes électroluminescentes, et une dalle tactile 301 superposée aux moyens d'affichage 310, à l'avant de ceux-ci.

Les moyens d'affichage 310 et la dalle tactile 301 sont recouverts par la plaque de protection 201 mentionnée ci-dessus.

La plaque de protection 201 s'étend au-delà du pourtour de l'écran tactile, et recouvre ici l'ensemble des éléments que comporte l'interface d'interaction 200, à l'exception des boutons de commande 225, 226 et 227, comme cela a été mentionné ci-dessus.

La dalle tactile 301 permet, en exploitant par exemple des effets capacitifs, ou des effets résistifs, de détecter la présence d'au moins un doigt d'un utilisateur sur la face avant de l'écran tactile, et de déterminer la position pointée ainsi par l'utilisateur sur cette surface.

Les moyens d'affichage 310 sont ici montés fixement sur un châssis 305, sur lequel est aussi montée fixement une plaque-support de circuit imprimé 304, sensiblement parallèle à la plaque de protection 201.

Comme le montre cette figure 3, l'un des premiers émetteurs 203 est monté fixement sur la plaque-support de circuit imprimé 304, par exemple au moyen de deux soudures permettant par ailleurs de le connecter électriquement à un module de commande du type de celui décrit en référence à la figure 1.

On notera ici que seul l'un des émetteurs 203 est ici représenté, mais que l'agencement des autres émetteurs est sensiblement le même.

L'émetteur 203 est tourné du côté de la face interne 311 de la plaque de protection 201. Il émet un faisceau de rayons lumineux dont la direction moyenne est sensiblement perpendiculaire à la plaque-support de circuit imprimé 304, et donc sensiblement perpendiculaire à la plaque de protection 201.

Un guide de lumière 306 guide le rayonnement émis par l'émetteur 203 jusqu'au voisinage de la face interne 311 de la plaque de protection 201.

Le guide de lumière 306 présente une forme de cône tronqué, dont l'axe est sensiblement perpendiculaire à la plaque-support de circuit imprimé 304 et est centré sur l'émetteur 203, et dont le sommet tronqué est tourné vers l'émetteur 203.

Le rayonnement émis par l'émetteur 203 pénètre dans le guide de lumière 306 par ce sommet tronqué. Il est ensuite guidé jusqu'à la base de ce cône tronqué, située à proximité de la face interne 311 de la plaque de protection 201, notamment par réflexion sur la surface latérale dudit cône tronqué. Cette surface latérale est au moins partiellement réfléchissante dans le domaine de rayonnement infrarouge utilisé par le détecteur de proximité 15 de l'interface d'interaction 200.

On notera à ce sujet que le domaine de rayonnement infrarouge utilisé ici par le détecteur de proximité 15 de l'interface d'interaction correspond par exemple à des longueurs d'onde dans l'air comprises sensiblement entre 700 nanomètres et 950 nanomètres.

Le rayonnement ainsi guidé émerge du guide de lumière 306 par sa base. Au moins une partie de ce rayonnement pénètre ensuite dans un composant optique 307, situé entre le guide de lumière 306 et la face interne 311 de la plaque de protection 201.

Le composant optique 307 remplit à la fois la fonction d'une lentille convergente, réduisant ainsi la divergence du faisceau de rayons lumineux qui le traverse, et la fonction d'un prisme déviant la direction moyenne d'un tel faisceau. Il est par exemple fabriqué par moulage d'une matière plastique transparente au moins partiellement dans ledit domaine de rayonnement infrarouge.

La face d'entrée du composant 307, située du côté de la base du guide de lumière 306, est convexe, de manière à remplir la même fonction qu'une lentille convergente.

La face de sortie du composant 307 est plane. Elle est située du côté de la face interne 311 de la plaque de protection 201, et est sensiblement parallèle à cette dernière.

La base du guide de lumière 306 et la face d'entrée du composant 307 sont globalement inclinées l'une par rapport à l'autre, de manière à dévier la direction moyenne du faisceau de rayons lumineux qui le traverse vers une zone de l'espace situé à l'avant de l'écran tactile 230.

Ainsi, bien que l'émetteur 203 soit positionné sur le pourtour de l'écran tactile, il éclaire une zone de l'espace située à l'avant et en vis-à-vis de ce dernier, ce qui permet d'y détecter la main d'un utilisateur, comme expliqué ci-dessus. Il est intéressant de pouvoir détecter la main d'un utilisateur dans une telle zone, puisque c'est dans celle-ci que se situe la main d'un utilisateur, lorsqu'il l'approche de l'écran tactile pour interagir avec l'interface 200.

La zone de la face interne 311 de la plaque de protection 201 qui est située en vis-à-vis de la face de sortie du composant optique 307, est couverte d'un premier revêtement 302, plus transparent dans ledit domaine de rayonnement infrarouge que dans le domaine de rayonnement visible.

Chaque émetteur 205, 207, 208, 209, 211, 212, 213, 215, 217, 218 et chaque récepteur 206, 210, 216 peut être muni du même dispositif optique, comprenant un guide de lumière, tel que le guide 306, un composant optique tel que le composant 307, et un revêtement, tel que le revêtement 302, plus transparent dans ledit domaine de rayonnement infrarouge que dans le domaine de rayonnement visible.

Il est intéressant d'intercaler ainsi un tel premier revêtement 302 sur le trajet du faisceau de rayons lumineux émis par chaque émetteur, notamment de manière à éliminer ou réduire une éventuelle composante correspondant à un rayonnement du domaine visible. Les émetteurs 206, 210, 216 du détecteur de proximité 15 peuvent en effet comprendre par exemple des diodes électroluminescentes au silicium (robustes, efficaces et peu couteuses), qui émettent un rayonnement dans ledit domaine de rayonnement infrarouge, mais également dans le domaine de rayonnement du visible. Ce dernier peut avoir un effet parasite, par exemple en éblouissant l'utilisateur. Il est donc intéressant de pouvoir ainsi l'éliminer.

En outre, puisqu'un tel premier revêtement 302 est partiellement opaque dans le domaine de rayonnement du visible, il masque au moins en partie l'intérieur de l'interface d'interaction 200, améliorant ainsi son apparence.

Préférentiellement, ce premier revêtement 302 présentera un taux d'opacité dans le domaine du visible qui est supérieur à 50 %.

Ce premier revêtement 302 est situé du côté de la face interne 311 de la plaque de protection 201, afin d'être protégé par cette dernière, et pour conserver le caractère lisse et continu de la face extérieure de ladite plaque de protection 201.

Il est par ailleurs intéressant d'intercaler ainsi un tel premier revêtement 302 sur le trajet des rayons lumineux parvenant à chaque récepteur 206, 210, 216, pour que le fonctionnement du détecteur de proximité 15 ne soit pas perturbé par de la lumière visible à laquelle le récepteur pourrait être sensible, et, à nouveau, pour améliorer l'apparence de l'interface d'interaction.

Il est intéressant aussi que chaque récepteur 206, 210, 216 soit muni, de même que les émetteurs 203, 205, 207, 208, 209, 211, 212, 213, 215, 217, 218 d'un guide de lumière et d'un composant optique tel que le composant 307, de manière à collecter et diriger efficacement vers le récepteur un rayonnement provenant de la zone de l'espace située en vis-à-vis de la face avant de l'écran tactile.

Comme le montre la figure 3, de même que l'émetteur 203 du détecteur de proximité 15, l'émetteur 204 des moyens de rétro-éclairage :
- est monté fixement sur la plaque-support de circuit imprimé 304,
- est tourné du côté de la face interne 311 de la plaque de protection 201, et
- émet un faisceau de rayons lumineux dont la direction moyenne est sensiblement perpendiculaire à la plaque-support de circuit imprimé 304.

Un guide de lumière 308, similaire au guide de lumière 306 décrit ci-dessus, guide le rayonnement émis par l'émetteur 204 jusqu'à la face interne 311 de la plaque de protection 201.

La zone de la face interne 311 de la plaque de protection 201, située en vis-à-vis de la face de sortie du guide de lumière 308, est couverte d'un second revêtement 303, plus transparent dans le domaine de rayonnement visible que dans ledit domaine de rayonnement infrarouge.

Le second revêtement 303 présente une couleur, vue dans le domaine de rayonnement visible, sensiblement identique à celle du premier revêtement 302, ce qui améliore l'homogénéité et l'esthétique de l'interface d'interaction 200.

Une cache 309 complète le dispositif en protégeant l'arrière de l'interface d'interaction.

Un exemple de réalisation des premier et second revêtements 302, 303 mentionnés ci-dessus est représenté schématiquement en coupe sur la figure 4.

Le premier revêtement 302 comprend une première couche 401 située contre la face interne 311 de la plaque de protection 201 et une seconde couche 402, superposée à la première couche 401. Le composant optique 307 est superposé à la seconde couche 302.

Le second revêtement 303 comprend une première couche 403 située contre la face interne 311 de la plaque de protection 201 et une seconde couche 404, superposée à la première couche 403.

Les premières couches 401 et 403 des premier et second revêtements sont ici identiques et constituent une même couche continue. Celle-ci est sensiblement transparente dans ledit domaine de rayonnement infrarouge et dans une partie du domaine de rayonnement visible. Elle inclut des pigments pris dans un liant, qui donnent à cette couche sa couleur. La couleur des premier et second revêtements, vue dans le domaine de rayonnement visible est principalement déterminée par la couleur de cette première couche.

Cette couche commune aux premier et second revêtements 302, 303 permet d'obtenir une couleur particulièrement proche pour ces deux revêtements, tout en facilitant leur réalisation.

La seconde couche 402 du premier revêtement 302 inclut des pigments pris dans un liant, qui rendent cette couche plus transparente dans ledit domaine de rayonnement infrarouge, que dans le domaine de rayonnement visible.

Vu dans le domaine de rayonnement visible, le premier revêtement est donc gris sombre ou noir, avec une coloration qui dépend des pigments choisis pour la première couche 401. Vu dans le domaine de rayonnement visible, le premier revêtement peut donc par exemple être noir, avec une nuance rouge, verte, ou encore bleue.

La seconde couche 404 du second revêtement 303 inclut des pigments pris dans un liant, qui rendent cette couche plus transparente dans le domaine de rayonnement visible que dans ledit domaine de rayonnement infrarouge.

Dans un mode de réalisation préféré, on peut prévoir en outre qu'un troisième revêtement couvre une zone de la face interne 311 de la plaque de protection 201 distincte d'une zone de ladite face interne 311 couverte du premier revêtement 302, d'une zone de ladite face interne 311 couverte du second revêtement 303, et d'une zone de ladite face interne 311 située en vis-à-vis de l'écran tactile 230.

Ce troisième revêtement peut comprendre une couche située contre la face interne 311 de la plaque de protection 201, identique à la couche 401, de manière à présenter, vue dans le domaine de rayonnement visible, une couleur sensiblement identique à la couleur du premier revêtement 302. Une apparence encore plus homogène et esthétique de la façade de l'interface d'interaction 200 est ainsi obtenue.

Ce troisième revêtement peut comprendre, de manière optionnelle, une deuxième couche recouvrant la couche décrite ci-dessus, au moins partiellement opaque dans le domaine de rayonnement du visible, de manière comparable à la couche 402. Cette deuxième couche masque alors une partie de l'intérieur de l'interface d'interaction 200, qui aurait été visible sinon, améliorant encore l'apparence de l'interface d'interaction 200.

De manière comparable, la zone de la face interne 311 de la plaque de protection 201 qui est située en vis-à-vis de l'écran tactile 230 peut être couverte d'un quatrième revêtement, présentant une couleur sensiblement identique à la couleur du premier revêtement, afin d'unifier encore l'apparence de l'interface d'interaction 200.

Ce quatrième revêtement est alors plus transparent dans le domaine de rayonnement visible que dans ledit domaine de rayonnement infrarouge, de même que le second revêtement 303 décrit ci-dessus. Il est en outre suffisamment transparent dans le domaine de rayonnement du visible pour ne pas gêner la vision des moyens d'affichage 310 depuis l'extérieur de l'interface d'interaction 200. Il présente ainsi préférentiellement un taux d'opacité inférieur à 10%.

## Revendications

1. Interface d'interaction (200) comprenant :
- un écran tactile (230) recouvert par une plaque de protection (201) sensiblement plane qui est au moins en partie transparente dans le domaine de rayonnement visible et qui présente une face interne (311) tournée vers ledit écran tactile (230), et
- un détecteur de proximité (15) comportant au moins un émetteur (203, 205, 207, 208, 209, 211, 212, 213, 215, 217, 218) rayonnant dans un domaine infrarouge et au moins un récepteur (206, 210, 216) adapté à détecter un rayonnement dans ledit domaine infrarouge, chaque émetteur et chaque récepteur (206, 210, 216) étant situé sur le pourtour (202) dudit écran tactile (230),
dans laquelle ladite plaque de protection (201) :
- est transparente dans ledit domaine de rayonnement infrarouge,
- recouvre chaque émetteur (203, 205, 207, 208, 209, 211, 212, 213, 215, 217, 218) et chaque récepteur (206, 210, 216),
- et présente sur sa face interne (311) au moins une zone, située en vis-à-vis de chaque émetteur (203, 205, 207, 208, 209, 211, 212, 213, 215, 217, 218) et de chaque récepteur (206, 210, 216), couverte d'un premier revêtement (302) plus transparent dans ledit domaine de rayonnement infrarouge que dans le domaine de rayonnement visible, **caractérisée en ce que** l'interface d'interaction (200) comprend en outre :
- un guide de lumière (306) présentant une forme de cône tronqué, dont le sommet tronqué est tourné vers au moins un desdits émetteurs (203), et dont l'axe est sensiblement perpendiculaire à une plaque-support de circuit imprimé (304), sur laquelle est montée ledit émetteur (203), et est centré sur ledit émetteur (203), et la surface latérale dudit cône tronqué est au moins partiellement réfléchissante dans le domaine de rayonnement infrarouge utilisé par le détecteur de proximité (15) de l'interface d'interaction (200)
- un composant optique (307), remplissant à la fois la fonction d'une lentille convergente, réduisant ainsi la divergence d'un faisceau de rayons lumineux qui le traverse, et la fonction d'un prisme, déviant la direction moyenne dudit faisceau, ledit composant optique (307) étant situé entre le guide de lumière (306) et la face interne (311) de la plaque de protection (201), la base du guide de lumière (306) et la face d'entrée du composant optique (307) étant globalement inclinées l'une par rapport à l'autre.

2. Interface d'interaction (200) selon la revendication précédente, dans laquelle il est en outre prévu des moyens de rétro-éclairage (204) tournés du côté de la face interne (311) de la plaque de protection (201), ladite plaque de protection (201) étant couverte, en vis-à-vis desdits moyens de rétro-éclairage (204), d'un second revêtement (303) plus transparent dans le domaine de rayonnement visible que dans ledit domaine de rayonnement infrarouge.

3. Interface d'interaction (200) selon la revendication 2, dans laquelle une zone de la face interne (311) de la plaque de protection (201) distincte :
- d'une zone de ladite face interne (311) couverte du premier revêtement (302),
- d'une zone de ladite face interne (311) couverte du second revêtement (303), et
- d'une zone de ladite face interne (311) située en vis-à-vis de l'écran tactile (230)
est couverte d'un troisième revêtement, présentant, vu dans le domaine de rayonnement visible, une couleur sensiblement identique à la couleur du premier revêtement (302).

4. Interface d'interaction (200) selon la revendication 2, dans laquelle les premier et second revêtements (302, 303) présentent des couleurs, vues dans le domaine de rayonnement visible, sensiblement identiques.

5. Interface d'interaction (200) selon la revendication 4, dans laquelle les premier et second revêtements (302, 303) comprennent chacun au moins une première couche (401, 403) située contre la face interne (311) de la plaque de protection (201) et une seconde couche (402, 404) superposée à la première couche (401, 403), telles que :
- la première couche (401, 403) est identique pour le premier (302) et le second (303) revêtement, est sensiblement transparente dans ledit domaine de rayonnement infrarouge et dans une partie du domaine de rayonnement visible, et présente une couleur, vue dans le domaine de rayonnement visible, qui détermine principalement la couleur de chacun desdits revêtements (302, 303),
- la seconde couche (402) du premier revêtement (302) est plus transparente dans ledit domaine de rayonnement infrarouge que dans le domaine de rayonnement visible, et
- la seconde couche (404) du second revêtement (303) est plus transparente dans le domaine de rayonnement visible que dans ledit domaine de rayonnement infrarouge.

6. Interface d'interaction (200) selon l'une des revendications 1 à 5, dans lequel la plaque de protection (201) présente sur sa face interne (311) au moins une zone, située en vis-à-vis de l'écran tactile (230), couverte d'un quatrième revêtement plus transparent dans le domaine de rayonnement visible que dans ledit domaine de rayonnement infrarouge et présentant, vue dans le domaine de rayonnement visible, une couleur sensiblement identique à la couleur du premier revêtement (302).

7. Interface d'interaction (200) selon l'une des revendications 1 à 6, comprenant au moins trois récepteurs (206, 210, 216) adaptés à détecter un rayonnement dans ledit domaine infrarouge, dans laquelle l'écran tactile (230) présente un contour (202) en forme de rectangle, et dans laquelle lesdits récepteurs (206, 210, 216) sont répartis sur au moins trois côtés distincts (222, 223, 224) dudit rectangle.

8. Interface d'interaction (200) selon la revendication 7, comprenant en outre au moins trois émetteurs (203, 212, 218) rayonnant dans ledit domaine infrarouge, et dans laquelle lesdits émetteurs (203, 212, 218) sont répartis sur au moins trois côtés distincts (222, 223, 224) dudit rectangle.

9. Interface d'interaction (200) selon l'une des revendications 1 à 8, comprenant en outre au moins un capteur tactile capacitif (219, 220, 221) distinct de l'écran tactile (230), situé sur le pourtour dudit écran tactile (230), et dans laquelle il est prévu que la plaque de protection (201) recouvre chaque capteur tactile capacitif (219, 220, 221).

10. Interface d'interaction (200) selon l'une des revendications 1 à 9, comprenant en outre au moins un bouton de commande (225, 226, 227) accessible à l'usager, engagé dans une ouverture prévue dans la plaque de protection (201), ladite ouverture étant de forme complémentaire de la forme dudit bouton de commande (225, 226, 227).

## Patentansprüche

1. Interaktionsschnittstelle (200), die enthält:
- einen Berührungsbildschirm (230), der von einer im Wesentlichen ebenen Schutzplatte (201) bedeckt wird, die zumindest zum Teil im sichtbaren Strahlungsbereich durchsichtig ist und die eine zum Berührungsbildschirm (230) weisende Innenseite (311) aufweist, und
- einen Näherungssensor (15), der mindestens einen in einem Infrarotbereich strahlenden Emitter (203, 205, 207, 208, 209, 211, 212, 213, 215, 217, 218) und mindestens einen Empfänger (206, 210, 216) aufweist, der geeignet ist, einen Strahlung im Infrarotbereich zu erfassen, wobei jeder Emitter und jeder Empfänger (206, 210, 216) sich auf dem Umfang (202) des Berührungsbildschirms (230) befindet,
wobei die Schutzplatte (201):
- im Infrarotstrahlungsbereich durchsichtig ist,
- jeden Emitter (203, 205, 207, 208, 209, 211, 212, 213, 215, 217, 218) und jeden Empfänger (206, 210, 216) bedeckt,
- und auf ihrer Innenseite (311) mindestens eine gegenüber jedem Emitter (203, 205, 207, 208, 209, 211, 212, 213, 215, 217, 218) und jedem Empfänger (206, 210, 216) befindliche Zone aufweist, die von einer ersten Verkleidung (302) bedeckt wird, die im Infrarotstrahlungsbereich durchsichtiger ist als im sichtbaren Strahlungsbereich,
**dadurch gekennzeichnet, dass** die Interaktionsschnittstelle (200) außerdem enthält:
- einen Lichtleiter (306), der die Form eines Kegelstumpfs aufweist, dessen stumpfer Scheitel zu mindestens einem der Emitter (203) weist, und dessen Achse im Wesentlichen lotrecht zu einer Druckschaltungs-Montageplatte (304) ist, auf die der Emitter (203) montiert ist, und der auf den Emitter (203) zentriert ist, und die Seitenfläche des Kegelstumpfs zumindest teilweise im vom Näherungssensor (15) der Interaktionsschnittstelle (200) verwendeten Infrarotstrahlungsbereich reflektierend ist,
- ein optisches Bauteil (307), das sowohl die Funktion einer konvergierenden Linse, wodurch die Divergenz eines es durchquerenden Lichtstrahlbündels reduziert wird, als auch die Funktion eines Prismas erfüllt, das die mittlere Richtung des Strahls ablenkt, wobei das optische Bauteil (307) sich zwischen dem Lichtleiter (306) und der Innenseite (311) der Schutzplatte (201) befindet, wobei die Basis des Lichtleiters (306) und die Eingangsseite des optischen Bauteils (307) global zueinander geneigt sind.

2. Interaktionsschnittstelle (200) nach dem vorhergehenden Anspruch, wobei außerdem Rückbeleuchtungseinrichtungen (204) vorgesehen sind, die zur Innenseite (311) der Schutzplatte (201) weisen, wobei die Schutzplatte (201) gegenüber den Rückbeleuchtungseinrichtungen (204) von einer zweiten Verkleidung (303) bedeckt wird, die im sichtbaren Strahlungsbereich durchsichtiger ist als im Infrarotstrahlungsbereich.

3. Interaktionsschnittstelle (200) nach Anspruch 2, wobei eine Zone der Innenseite (311) der Schutzplatte (201) anders als:
- eine Zone der Innenseite (311), die von der ersten Verkleidung (302) bedeckt wird,
- eine Zone der Innenseite (311), die von der zweiten Verkleidung (303) bedeckt wird, und
- eine Zone der Innenseite (311), die sich gegenüber dem Berührungsbildschirm (230) befindet,
von einer dritten Verkleidung bedeckt wird, die im sichtbaren Strahlungsbereich gesehen eine Farbe im Wesentlichen gleich der Farbe der ersten Verkleidung (302) aufweist.

4. Interaktionsschnittstelle (200) nach Anspruch 2, wobei die erste und die zweite Verkleidung (302, 303) im sichtbaren Strahlungsbereich gesehen im Wesentlichen gleiche Farben aufweisen.

5. Interaktionsschnittstelle (200) nach Anspruch 4, wobei die erste und die zweite Verkleidung (302, 303) je mindestens einer erste Schicht (401, 403), die sich gegen die Innenseite (311) der Schutzplatte (201) befindet, und eine zweite Schicht (402, 404) enthalten, die auf die erste Schicht (401, 403) aufgelegt ist, derart, dass:
- die erste Schicht (401, 403) für die erste (302) und die zweite (303) Verkleidung gleich ist, im Infrarotstrahlungsbereich und in einem Teil des sichtbaren Strahlungsbereichs im Wesentlichen durchsichtig ist, und im sichtbaren Strahlungsbereich gesehen eine Farbe aufweist, die hauptsächlich die Farbe jeder der Verkleidungen (302, 303) bestimmt,
- die zweite Schicht (402) der ersten Verkleidung (302) im Infrarotstrahlungsbereich durchsichtiger ist als im sichtbaren Strahlungsbereich, und
- die zweite Schicht (404) der zweiten Verkleidung (303) im sichtbaren Strahlungsbereich durchsichtiger ist als im Infrarotstrahlungsbereich.

6. Interaktionsschnittstelle (200) nach einem der Ansprüche 1 bis 5, wobei die Schutzplatte (201) auf ihrer Innenseite (311) mindestens eine gegenüber dem Berührungsbildschirm (230) befindliche Zone aufweist, die von einer vierten Verkleidung bedeckt wird, die im sichtbaren Strahlungsbereich durchsichtiger ist als im Infrarotstrahlungsbereich, und im sichtbaren Strahlungsbereich gesehen eine im Wesentlichen gleiche Farbe wie die Farbe der ersten Verkleidung (302) aufweist.

7. Interaktionsschnittstelle (200) nach einem der Ansprüche 1 bis 6, die mindestens drei Empfänger (206, 210, 216) aufweist, die geeignet sind, eine Strahlung im Infrarotbereich zu erfassen, wobei der Berührungsbildschirm (230) einen Umriss (202) in Form eines Rechtecks aufweist, und wobei die Empfänger (206, 210, 216) auf mindestens drei verschiedenen Seiten (222, 223, 224) des Recktecks verteilt sind.

8. Interaktionsschnittstelle (200) nach Anspruch 7, die außerdem mindestens drei Emitter (203, 212, 218) enthält, die im Infrarotbereich strahlen, und wobei die Emitter (203, 212, 218) auf mindestens drei unterschiedlichen Seiten (222, 223, 224) des Rechtecks verteilt sind.

9. Interaktionsschnittstelle (200) nach einem der Ansprüche 1 bis 8, die außerdem mindestens einen vom Berührungsbildschirm (230) unterschiedlichen kapazitiven Berührungssensor (219, 220, 221) enthält, der sich auf dem Umriss des Berührungsbildschirms (230) befindet, und wobei vorgesehen ist, dass die Schutzplatte (201) jeden kapazitiven Berührungssensor (219, 220, 221) bedeckt.

10. Interaktionsschnittstelle (200) nach einem der Ansprüche 1 bis 9, die außerdem mindestens einen für den Benutzer zugänglichen Steuerknopf (225, 226, 227) enthält, der in eine in der Schutzplatte (201) vorgesehene Öffnung eingesetzt ist, wobei die Öffnung eine zur Form des Steuerknopfs (225, 226, 227) komplementäre Form hat.

## Claims

1. Interaction interface (200) comprising:
- a touchscreen (230) covered by a substantially flat protective plate (201) that is at least partly transparent in the visible radiation range and that has an inner face (311) oriented towards said touchscreen (230), and
- a proximity detector (15) including at least one emitter (203, 205, 207, 208, 209, 211, 212, 213, 215, 217, 218) radiating in an infrared range and at least one receiver (206, 210, 216) designed to detect radiation in said infrared range, each emitter and each receiver (206, 210, 216) being situated on the perimeter (202) of said touchscreen (230),
wherein said protective plate (201):
- is transparent in said infrared radiation range,
- covers each emitter (203, 205, 207, 208, 209, 211, 212, 213, 215, 217, 218) and each receiver (206, 210, 216),
- and has, on its inner face (311), at least one zone, situated opposite each emitter (203, 205, 207, 208, 209, 211, 212, 213, 215, 217, 218) and each receiver (206, 210, 216), covered with a first coating (302) that is more transparent in said infrared radiation range than in the visible radiation range, **characterized in that** the interaction interface (200) furthermore comprises:
- a light guide (306) having the shape of a truncated cone whose truncated apex is oriented towards at least one of said emitters (203), and whose axis is substantially perpendicular to a printed circuit board (304) on which said emitter (203) is mounted, and is centred on said emitter (203), and the lateral surface of said truncated cone is at least partially reflective in the infrared radiation range used by the proximity detector (15) of the interaction interface (200)
- an optical component (307) performing both the function of a convergent lens, thus reducing the divergence of a beam of light rays passing through it, and the function of a prism, deflecting the mean direction of said beam, said optical component (307) being situated between the light guide (306) and the inner face (311) of the protective plate (201), the base of the light guide (306) and the entry face of the optical component (307) being inclined overall with respect to one another.

2. Interaction interface (200) according to the preceding claim, wherein backlighting means (204) are furthermore provided that are oriented towards the side of the inner face (311) of the protective plate (201), said protective plate (201) being covered, opposite said backlighting means (204), with a second coating (303) that is more transparent in the visible radiation range than in said infrared radiation range.

3. Interaction interface (200) according to Claim 2, wherein a zone of the inner face (311) of the protective plate (201) that is separate:
- from a zone of said inner face (311) covered with the first coating (302),
- from a zone of said inner face (311) covered with the second coating (303), and
- from a zone of said inner face (311) situated opposite the touchscreen (230)
is covered with a third coating having, seen in the visible radiation range, a colour that is substantially identical to the colour of the first coating (302).

4. Interaction interface (200) according to Claim 2, wherein the first and second coatings (302, 303) have colours, seen in the visible radiation range, that are substantially identical.

5. Interaction interface (200) according to Claim 4, wherein the first and second coatings (302, 303) each comprise at least one first layer (401, 403) situated against the inner face (311) of the protective plate (201) and a second layer (402, 404) superimposed on the first layer (401, 403), such that:
- the first layer (401, 403) is identical for the first (302) and the second (303) coating, is substantially transparent in said infrared radiation range and in a part of the visible radiation range, and has a colour, seen in the visible radiation range, that primarily determines the colour of each of said coatings (302, 303),
- the second layer (402) of the first coating (302) is more transparent in said infrared radiation range than in the visible radiation range, and
- the second layer (404) of the second coating (303) is more transparent in the visible radiation range than in said infrared radiation range.

6. Interaction interface (200) according to one of Claims 1 to 5, wherein the protective plate (201) has, on its inner face (311), at least one zone, situated opposite the touchscreen (230), covered with a fourth coating that is more transparent in the visible radiation range than in said infrared radiation range and having, seen in the visible radiation range, a colour that is substantially identical to the colour of the first coating (302).

7. Interaction interface (200) according to one of Claims 1 to 6, comprising at least three receivers (206, 210, 216) designed to detect radiation in said infrared range, wherein the touchscreen (230) has a profile (202) in the shape of a rectangle, and wherein said receivers (206, 210, 216) are distributed over at least three separate sides (222, 223, 224) of said rectangle.

8. Interaction interface (200) according to Claim 7, furthermore comprising at least three emitters (203, 212, 218) radiating in said infrared range, and wherein said emitters (203, 212, 218) are distributed over at least three separate sides (222, 223, 224) of said rectangle.

9. Interaction interface (200) according to one of Claims 1 to 8, furthermore comprising at least one capacitive touch sensor (219, 220, 221) separate from the touchscreen (230), situated on the perimeter of said touchscreen (230), and wherein there is provision for the protective plate (201) to cover each capacitive touch sensor (219, 220, 221).

10. Interaction interface (200) according to one of Claims 1 to 9, furthermore comprising at least one control button (225, 226, 227) accessible to the user, engaged in an aperture provided in the protective plate (201), said aperture being of a shape complementary to the shape of said control button (225, 226, 227).
